# EUROPEAN PATENT APPLICATION

(11) **EP 4 765 878 A1**
(43) Date of publication of application: **24.06.2026**
(21) Application number: 24221844.4
(22) Date of filing: 19.12.2024
(51) Int. Cl.: H04R 25/00, H04R 1/10, G06F 3/01

(54) **HEARING SYSTEM AND HEARING DEVICE WITH HEAD-TRACKING AND RELATED METHODS**

(71) Applicant: GN Hearing A/S, 2750 Ballerup (DK)
(72) Inventor: UDESEN, Jesper, DK-2750 Ballerup (DK); PIECHOWIAK, Tobias, DK-2750 Ballerup (DK); GLAD, Jesper, DK-2750 Ballerup (DK)
(74) Representative: Aera A/S

(57) **Abstract**

A method of head-tracking of a subject in a hearing system comprising a first hearing device and a second hearing device is disclosed. The method comprises obtaining, from a first accelerometer of the first hearing device, first accelerometer data. The method comprises obtaining, from a second accelerometer of the second hearing device, second accelerometer data. The method comprises determining a head parameter indicative of position and/or movement of the head of the subject based on the first accelerometer data and the second accelerometer data. The method comprises providing an output indicative of the head parameter.

## Description

The present disclosure relates to a hearing system comprising a first hearing device, a second hearing device, and optionally an accessory device and related methods including a method of operating a hearing system.

### BACKGROUND

Data obtained by head-tracking from hearing devices provide valuable insights into enhancing the performance of a hearing system for a user. The components used for head-tracking are costly and have a high-power consumption. The high-power consumption may require users to charge their hearing devices or change the battery more often.

### SUMMARY

Accordingly, there is a need for hearing devices and methods with the ability to provide head-tracking with reduced component costs and/or reduced power consumption.

A method of head-tracking of a subject in a hearing system is disclosed. The hearing system comprises a first hearing device and a second hearing device. The method comprises obtaining, from a first accelerometer of the first hearing device, first accelerometer data. The method comprises obtaining, from a second accelerometer of the second hearing device, second accelerometer data. The method comprises determining a head parameter indicative of position and/or movement of the head of the subject based on the first accelerometer data and the second accelerometer data. The method comprises providing an output indicative of the head parameter.

Also disclosed is a hearing device. The hearing device comprises a three-axis accelerometer for provision of a first accelerometer signal. The hearing device comprises a set of microphones comprising a first microphone for provision of a first microphone input signal. The hearing device comprises a radio transceiver. The hearing device comprises a processor for processing input signals and providing an electrical output signal based on the input signals. The hearing device comprises a receiver for converting the electrical output signal to an audio output signal. The hearing device is configured to transmit, via the radio transceiver, first accelerometer data based on the first accelerometer signal.

Also disclosed is a hearing system. The hearing system comprises a first hearing device and a second hearing device. The hearing system is configured to obtain, from a first accelerometer of the first hearing device, first accelerometer data. The hearing system is configured to obtain, from a second accelerometer of the second hearing device, second accelerometer data. The hearing system is configured to determine a head parameter indicative of position and/or movement of the head of the subject based on the first accelerometer data and the second accelerometer data. The hearing system is configured to provide an output indicative of the head parameter.

It is an important advantage of the hearing device that the head-tracking is based on two three-axis accelerometers. These accelerometers have a significantly lower power consumption compared to conventional components providing longer operational time. Further, the three-axis accelerometer has a lower component cost than conventional components.

The present disclosure allows for improved, such as power-efficient, hearing device-based head-tracking. Obtaining improved head-tracking data, may allow for a better user experience and a better user customization. Head-tracking may be used for e.g. controlling an accessory device in a hearing system, controlling a hearing device in a hearing system, and/or obtaining data on user activity.

Further, head-tracking may be used to detect movements such as shaking and/or trembling. Shaking and/or trembling may be indicative of a disease or ailment relating to involuntary movement such as epilepsy, Parkinson's disease and Huntington's disease. It is advantageous that the present disclosure may assist in detecting indicators for or diagnosing such diseases or ailments at an earlier stage.

The present disclosure provides a power-efficient and cost-efficient hearing system with wireless communication enabling controlling an accessory device using stored gestures from head-tracking.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
- Fig. 1: schematically illustrates an example hearing system according to this disclosure,
- Fig. 2: shows a flow diagram of an example method according to this disclosure,
- Fig. 3: schematically illustrates the three axes of a three-axis accelerometer, and
- Fig. 4: shows an example of yaw, pitch and roll movement of a head.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The disclosed hearing system for example comprises a first hearing device and a second hearing device. A hearing device, such as the first hearing device and/or the second hearing device, may be configured to be worn at an ear of a user and may be a hearable (e.g., earbuds, headphones, etc.) or a hearing aid, wherein the processor is configured to compensate for a hearing loss of a user. In one or more examples or embodiments, the hearing device, such as the first hearing device and/or the second hearing device, can be seen as a hearing aid.

The hearing device may be of the behind-the-ear (BTE) type, in-the-ear (ITE) type, in-the-canal (ITC) type, receiver-in-canal (RIC) type or receiver-in-the-ear (RITE) type. The hearing device may be a binaural hearing device. The hearing system may comprise a first earpiece and a second earpiece, wherein the first earpiece and/or the second earpiece is an earpiece, such as a hearing device, as disclosed herein.

The hearing device, such as first hearing device and/or second hearing device, may be configured for wireless communication with one or more devices, such as with another hearing device, e.g. as part of a binaural hearing system, and/or with one or more accessory devices, such as a smartphone and/or a smart watch. The hearing device optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices.

The hearing device, such as first hearing device and/or second hearing device, optionally comprises a radio transceiver coupled to the antenna for converting the antenna output signal to a transceiver input signal. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device, such as first hearing device and/or second hearing device, comprises a set of microphones. The set of microphones may comprise one or more microphones. The set of microphones comprises a first microphone for provision of a first microphone input signal and/or a second microphone for provision of a second microphone input signal. The set of microphones may comprise N microphones for provision of N microphone signals, wherein N is an integer in the range from 1 to 10. In one or more exemplary hearing devices, the number N of microphones is two, three, four, five or more. The set of microphones may comprise a third microphone for provision of a third microphone input signal.

The hearing device, such as first hearing device and/or second hearing device, optionally comprises a pre-processing unit. The pre-processing unit may be connected to the radio transceiver for pre-processing the transceiver input signal. The pre-processing unit may be connected the first microphone for pre-processing the first microphone input signal. The pre-processing unit may be connected the second microphone if present for pre-processing the second microphone input signal. The pre-processing unit may comprise one or more A/D-converters for converting analog microphone input signal(s) to digital pre-processed microphone input signal(s).

The hearing system, the hearing device, a health data server device, a healthcare platform, and/or the accessory device may be configured for wireless communications via a wireless communication system, such as short-range wireless communications systems, such as Wi-Fi, Bluetooth (such as Auracast), Zigbee, IEEE 802.11, IEEE 802.15, infrared and/or the like. The hearing system, the hearing device, the health data server device, the healthcare platform, and/or the accessory device may be configured for communication via a network such as a global network, e.g. the internet, and/or a local network.

The hearing system, the hearing device and/or an electronic device (such as the accessory device) may be configured for wireless communications via a wireless communication system, such as a 3GPP system, such as a 3GPP system supporting one or more of: New Radio, NR, Narrow-band IoT, NB-IoT, and Long Term Evolution - enhanced Machine Type Communication, LTE-M, millimeter-wave communications, such as millimeter-wave communications in licensed bands, such as device-to-device millimeter-wave communications in licensed bands.

The hearing device, such as first hearing device and/or second hearing device, comprises a processor for processing input signals, such as pre-processed transceiver input signal and/or pre-processed microphone input signal(s). The processor provides an electrical output signal based on the input signals to the processor. Input terminal(s) of the processor are optionally connected to respective output terminals of the pre-processing unit. For example, a transceiver input terminal of the processor may be connected to a transceiver output terminal of the pre-processing unit. One or more microphone input terminals of the processor may be connected to respective one or more microphone output terminals of the pre-processing unit.

The hearing device, such as first hearing device and/or second hearing device, comprises a processor for processing input signals, such as pre-processed transceiver input signal(s) and/or pre-processed microphone input signal(s). The processor is optionally configured to compensate for hearing loss of a user of the hearing device. The processor provides an electrical output signal based on the input signals to the processor. Input terminal(s) of the processor are optionally connected to respective output terminals of the pre-processing unit. For example, a transceiver input terminal of the processor may be connected to a transceiver output terminal of the pre-processing unit. One or more microphone input terminals of the processor may be connected to respective one or more microphone output terminals of the pre-processing unit.

A method of head-tracking of a subject in a hearing system is disclosed. Head-tracking may be associated with detecting movement of a head. Head-tracking may provide data about user intent that enables customizing a hearing device to give an improved user experience. Head tracking may e.g. give information about orientation and/or movement of the head, detect anomalous head movements indicative of different diseases or ailments, and/or give information about level of concentration of a user during a task.

The hearing system comprises a first hearing device and a second hearing device. The method comprises obtaining, from a first accelerometer of the first hearing device, first accelerometer data. The method comprises obtaining, from a second accelerometer of the second hearing device, second accelerometer data. Accelerometer data, such as e.g. first accelerometer data and/or second accelerometer data, may be seen a data associated with an accelerometer, such as a three-axis accelerometer. For example, accelerometer data may comprise one or more of: linear acceleration, e.g. along three axes x,y, and z, and/or rotational acceleration, e.g. yaw, pitch, and roll. Accelerometer data may be seen as data providing information about the conditions of an accelerometer, such as an accelerometer in a hearing device. Accelerometer data obtained from a hearing system of a user may for example be indicative of a head movement or a body movement.

The method comprises determining a head parameter indicative of position and/or movement of the head of the subject, e.g. based on the first accelerometer data and/or the second accelerometer data. A head parameter may be associated with a state or a change in a state of a head. In other words, a head parameter may be indicative of e.g. a head movement or a head position. A head parameter may be indicative of one or more of: a shaking movement, a jerking movement, an uncontrolled tremble, abnormal head movement. Some head parameters may be indicative of a disease or ailment. The hearing system may enable diagnosis of diseases or ailments through the head parameter. The method comprises providing an output indicative of the head parameter.

In one or more example methods, the head parameter comprises one of more of yaw, pitch, and roll of the head, such as a degree of one of more of yaw, pitch, and roll of the head. Yaw, pitch and roll may be associated with movements in an internal coordinate system. Yaw may be seen as rotation about a first axis, pitch may be seen as rotation about a second axis that is perpendicular to the first axis, roll may be seen as rotation about a third axis that is perpendicular to the first axis and perpendicular to the second axis. In a hearing system according to the present disclosure, yaw may for example be associated with a shaking of a head between left and right. In a hearing system according to the present disclosure, pitch may for example be associated with a nodding back and forth of a head. In a hearing system according to the present disclosure, roll may for example be associated with a tilting between left and right of a head.

In one or more example methods, the head parameter comprises one or more of first position parameter, a second position parameter, and a third position parameter. A position parameter, such as a first position parameter, a second position parameter, and a third position parameter, may be associated with a placement. A position parameter may be indicative of a relative placement. For example, having a first position parameter, a second position parameter, and a third position parameter may give information of the position of a head relative to a body or a default position of the head. A position parameter may be indicative of a movement.

In one or more examples, the first accelerometer is a three-axis accelerometer. In one or more example hearing systems, the second accelerometer is a three-axis accelerometer. An accelerometer is a sensor for measuring acceleration. A three-axis accelerometer is a sensor for measuring acceleration along three orthogonal axes. Thus, a three-axis accelerometer provides an accelerometer signal which is a three-coordinate sensor signal. In other words, two three-axis accelerometers with a relative distance allows for measuring e.g. position, yaw, pitch and roll of a system, such as the hearing system of the present disclosure.

In one or more example methods, the method comprises aligning the first accelerometer data and the second accelerometer data, and determine the head parameter based on the aligned accelerometer data. Aligning the first accelerometer data and the second accelerometer data may comprise determining a time difference between the first accelerometer data and the second accelerometer data and time-shifting one or both of the first accelerometer data and the second accelerometer data based on the time difference to align the first accelerometer data and the second accelerometer data.

In one or more examples, the hearing system comprises an accessory device. An accessory device may be associated with an electronic device. The accessory device comprises an interface, a processor, and a memory. The accessory device may for example be or comprise a mobile phone, such as a smartphone, a smart-watch, a special purpose device, a computer, such as a laptop computer or PC, or a tablet computer. The accessory device forms an accessory device to the hearing device(s). The accessory device may be paired with the hearing system and/or wirelessly connected to the hearing system. The accessory device may be able to communicate through signals and/or data with the hearing device(s) via a wireless connection.

In one or more example methods, the method comprises controlling, e.g. in the accessory device or in the first hearing device, a functionality of the hearing system based on the output. Controlling a functionality of the hearing system may be seen as altering a state of the hearing system. For example, a certain output may be associated with e.g. a changing of a volume or an answer to a phone call of the hearing system. In other words, specific movements by the head may be used to control a function of the hearing device(s) and/or accessory device of the hearing system, such as the hearing system presented in this disclosure.

In one or more example methods, providing an output indicative of the head parameter comprises feeding, e.g. from a hearing application stored in a memory of the accessory device, the head parameter and/or a gesture to a secondary application stored in a memory of the accessory device of the hearing system. A hearing application may be associated with an application on an electronic device, such as an accessory device in a hearing system, e.g. for controlling a functionality of a hearing system. A hearing application stored in the memory of an accessory device may be configured to allow transfer of e.g. data and/or a signal, such as a head parameter, to a secondary application stored in the memory of a hearing device. In other words, a head parameter provided to the hearing application may be further provided to a secondary application for e.g. further processing, data sampling and/or storing. For example, a secondary application may be configured to map a gesture to a control and derive a control signal from the gesture/control based on the head parameter and applying the control signal to the secondary application/the accessory device

In one or more example methods, the secondary application is one or more of a position application, a home automation application, a gaming application, a fitness application, a communication application, and a health application. A position application may be associated with secondary application of an accessory device used for determining a position, such as a GPS position. A position application may receive data from the Global Positioning Network (GPS) to determine the location of an accessory device. A position application may be used for determining e.g. a route and/or a distance between two different positions. A position application may be used to track and store a movement from one position to another position.

A home automation application may be associated with a secondary application of an accessory device used for controlling a functionality of e.g. a home appliance and/or an electronic device, via a wireless connection. For example, a home automation application may be used for changing a functionality of e.g. one or more of: a home lighting system, a kitchen utility, such as a refrigerator or a stove, an audio system, and a display. In other words a home automation application may be wirelessly connected to electronic appliances in a home, and may control a functionality through the wireless connection.

A gaming application may be associated with a secondary application of an accessory device used for accessing and executing electronic games on the accessory device.

A fitness application may be associated with a secondary application of an accessory device used in relation to physical activity. A fitness application may record measurements of performance relating to physical activity, such as e.g. a speed, a route, a heartrate, a body temperature. A fitness application may be connected to other electronic devices, e.g. a watch to obtain measurements of physical performance. In other words, a fitness application may be associated with an application for measuring physical performance and/or routes and weather conditions. A fitness application may record and store the measurements of physical performance and/or routes and weather conditions.

A communication application may be seen as a secondary application of an accessory device associated with communication with one or more electronic devices. A communication device may enable wireless communication between one or more electronic devices. A communication application may be configured to transfer and/or receive one or more of: text, audio, and data.

A health application may be seen as a secondary application of an accessory device associated with monitoring a user's health. In other words, a health application obtain, store, and process physical parameters of a user. A health application may e.g. be in wireless communication with a secondary accessory device, such as a watch and/or a hearing device, to obtain measurements of e.g. movement, heartrate, and/or tremors.

In one or more example methods, providing an output indicative of the head parameter comprises storing the head parameter in a memory of the hearing system. A memory of a hearing system may be configured to store one or more of: accessory device data, hearing device data, hearing system data, and measurements of physical parameters as disclosed herein.

In one or more example methods, providing an output indicative of the head parameter comprises determining a gesture based on the head parameter and mapping the gesture to a control. A gesture may be associated with one or more movements, e.g. in a given order. For example, a gesture may be seen as one or more movements in 3 dimensions, such as a nod e.g. followed by a tilt of a head. A gesture, e.g. made by a head, such as a head wearing a hearing device according to this disclosure, may be deconstructed into vectors in a three-dimensional space, and can be determined by e.g. two three-axis accelerometers. Acceleration measurements provided by two three-axis accelerometers enables determining a gesture by obtaining one or more of: position, yaw, pitch and roll.

In one or more example methods, the method comprises providing a control signal indicative of the control to one or both of the first hearing device and the second hearing device, e.g. in accordance with the gesture. A control signal may be indicative of a signal controlling a functionality, such as a functionality of a hearing device.

In one or more example methods, providing an output indicative of the head parameter comprises feeding the head parameter to a gesture classifier. A gesture classifier may be indicative of an application used to store head parameters. A gesture classifier may for example store data of historical head parameters in a memory. A gesture of a current head parameter, provided to the gesture classifier, may be compared to historical head parameters to identify the gesture. The gesture classifier may produce an output indicative of the gesture.

In one or more example methods, providing an output indicative of the head parameter comprises transmitting the head parameter to a server device. A server device may be configured to obtain, from an accessory device, an output indicative of a head parameter based on data from the two three-axis accelerometers of the present disclosure, e.g., via the interface of the server device and/or the interface of the accessory device. To obtain a head parameter from the accessory device may comprise to obtain, to receive, and/or to retrieve a head parameter from the accessory device, e.g., via the interface of the accessory device and/or the one or more interfaces of the server device. In other words, a server device may be associated with or comprise a database to store, receive, and/or transmit data, such as data indicative of a head parameter, such as a gesture. A server device may be implemented as a central computer system remote from the accessory device and controlled by a manufacturer of the hearing device(s) and/or hearing application.

A hearing device is disclosed. The hearing device comprises a three-axis accelerometer for provision of a first accelerometer signal. The hearing device comprises a set of microphones comprising a first microphone for provision of a first microphone input signal. The hearing device comprises a radio transceiver. The hearing device comprises a processor for processing input signals and providing an electrical output signal based on the input signals. The hearing device comprises a receiver for converting the electrical output signal to an audio output signal. The hearing device is configured to transmit, via the radio transceiver, first accelerometer data based on the first accelerometer signal.

A hearing system is disclosed. The hearing system comprises a first hearing device and a second hearing device. The hearing system is configured to obtain, from a first accelerometer of the first hearing device, first accelerometer data. The hearing system is configured to obtain, from a second accelerometer of the second hearing device, second accelerometer data. The hearing system is configured to determine a head parameter indicative of position and/or movement of the head of the subject based on the first accelerometer data and the second accelerometer data. The hearing system is configured to provide an output indicative of the head parameter.

In one or more example methods, the hearing system comprises processor circuitry configured to provide the output indicative of the head parameter. In one or more example methods, to provide the output comprises to determine or derive a gesture based on the head parameter, map the gesture to a control, and provide a control signal indicative of the control to one or both of the first hearing device and the second hearing device in accordance with the gesture.

It is noted that descriptions and features of hearing device/system functionality, such as hearing device/system configured to, also apply to methods and vice versa. For example, a description of a hearing device configured to determine also applies to a method, e.g. of operating a hearing device, wherein the method comprises determining and vice versa.

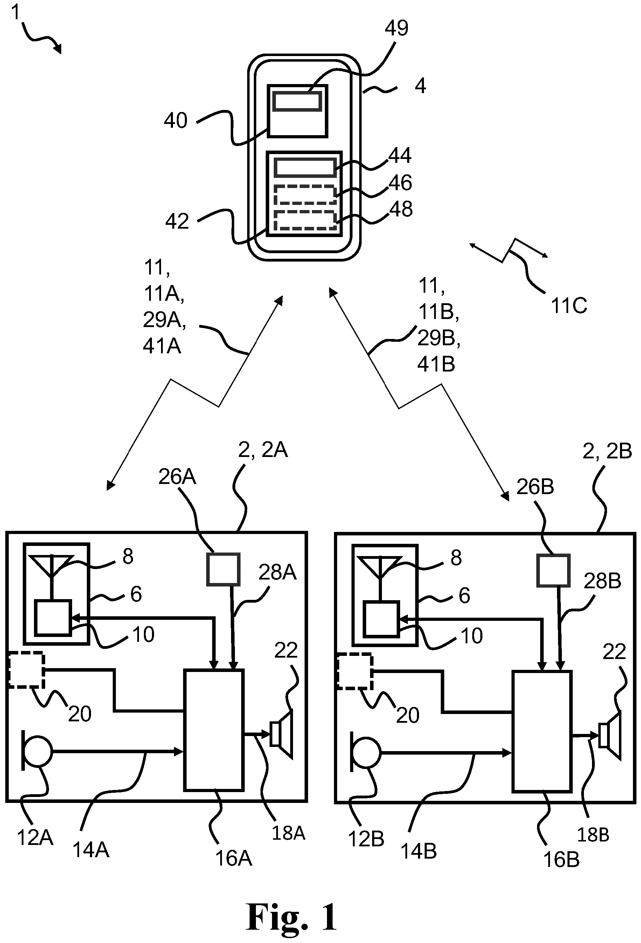

Fig. 1 schematically illustrates an example hearing system 1 according to this disclosure. The hearing system 1 comprises a first hearing device 2A, a second hearing device 2B and an accessory device 4. The first hearing device 2A may for example be a left hearing device. The second hearing device 2B may for example be a right hearing device.

The first hearing device 2A and the second hearing device 2B each comprise a transceiver module 6 for (wireless) communication with the accessory device 4 and/or the other hearing device of the hearing system. The transceiver module 6 comprises an antenna 8 and a transceiver 10 and is configured for wireless receipt and/or transmission of signals via wireless connection 11 to/from the accessory device 4. The first hearing device 2A and the second hearing device 2B each comprise a respective microphone 12A, 12B for provision of respective first microphone input signal 14A and second microphone input signal 14B to a processor 16A, 16B of the respective hearing device 2A, 2B. The processors 16A, 16B are configured to process, e.g. perform hearing loss compensation on, input signals such as the first microphone input signal 14A and second microphone input signal 14B, respectively according to one or more hearing device parameters and providing a respective first electrical output signal 18A and a second electrical output signal 18B based on input signals. The first hearing device 2A and/or the second hearing device 2B may comprise a user interface 20 connected to the processor 16A, 16B, and a receiver 22 for providing an audio output signal based the electrical output signal 18A, 18B.

The first hearing device 2A comprises a first accelerometer 26A. The first accelerometer may be a three-axis accelerometer sensing or measuring acceleration along three mutually orthogonal axes for provision of a first accelerometer signal 28A. The first accelerometer 26A is connected to the first processor 16A receiving the first accelerometer signal 28A. The first processor 16A is configured to transmit, via the radio transceiver 10, first accelerometer data 29A to the accessory device 4 via first wireless connection 11A, the first accelerometer data 29A based on the first accelerometer signal 28A.

The second hearing device 2B comprises a second accelerometer 26B. The second accelerometer may be a three-axis accelerometer sensing or measuring acceleration along three mutually orthogonal axes for provision of a second accelerometer signal 28B. The second accelerometer 26B is connected to the second processor 16B receiving the second accelerometer signal 28B. The second processor 16B is configured to transmit, via the radio transceiver 10, second accelerometer data 29B to the accessory device 4 via second wireless connection 11B, the second accelerometer data 29B based on the second accelerometer signal 28B.

The accessory device 4 may be a mobile phone, such as a smartphone as illustrated, however the accessory device may be one or more of: an accessory to a smartphone, such as a smart watch, a computer, a laptop, a special purpose device, or a tablet computer. The accessory device may comprise a user interface (not shown), a processor 40, a memory 42, and/or a transceiver module (not shown). The memory 42 may have a hearing application 44 stored therein. The accessory device 4 is configured to receive the first accelerometer data 29A from the first hearing device 2A and the second accelerometer data 29B from the second hearing device 2B. The accessory device 4 may be configured to perform a function based on the data 29A, 29B.

The processor 40 is configured to determine a head parameter indicative of position and/or movement of the head of the subject based on the first accelerometer data 29A and the second accelerometer data 29B. The head parameter is indicative of a head movement and/or a head position. A head parameter may be indicative of one or more of: a shaking movement, a jerking movement, an uncontrolled tremble, abnormal head movement. Some head parameters may be indicative of a disease or ailment. The hearing system may enable diagnosis of diseases or ailments through the head parameter. The processor 40, such as hearing application 44 stored in memory 42 and running on processor 40, is configured to provide an output indicative of the head parameter. The output may be used, e.g. for controlling one or more secondary applications including secondary first application 46 and/or secondary second application 48 stored in memory 42 and running on processor 40, and/or for controlling one or both hearing devices 2A, 2B.

The secondary first application 46 may be one or more of a position application, a home automation application, a gaming application, a fitness application, a communication application, and a health application, and the secondary second application 48 may be different from the secondary first application 46 and may be one or more of a position application, a home automation application, a gaming application, a fitness application, a communication application, and a health application.

The processor 40 may be configured to store the head parameter in the memory 42 of the hearing system and/or transmitting the head parameter to a server device via wireless connection 11C.

The processor 40 may comprise a gesture classifier 49 configured to, e.g. as part of providing an output indicative of the head parameter, determine a gesture based on the head parameter and map the gesture to a control. In other words, providing an output indicative of the head parameter optionally comprises feeding the head parameter to a gesture classifier. A gesture classifier may for example store data of historical head parameters mapped to gestures in a memory, e.g. as a look-up table. The gesture classifier may produce an output indicative of the gesture.

The processor 40 may be configured to provide such as transmit, e.g. as part of providing an output indicative of the head parameter, a control signal 41A, 41B indicative of the control to one or both of the first hearing device 2A and the second hearing device 2B, e.g. in accordance with the gesture. The control signals 41A, 41B control a functionality of the respective hearing device 2A, 2B, e.g. volume up or down and/or program selection.

The accessory device 4 is optionally configured to transmit, via wireless communication 11C, the head parameter to a server device, e.g. as part of providing an output indicative of the head parameter

A functionality of hearing system, such as the first hearing device 2A and/or the second hearing device 2B, may comprise one or more of: changing a program, adjusting a volume, answer and/or decline an incoming call, update a position, logging a health indication in a memory, such as an indication of e.g. epilepsy, Parkinson's disease, and/or Huntington's disease.

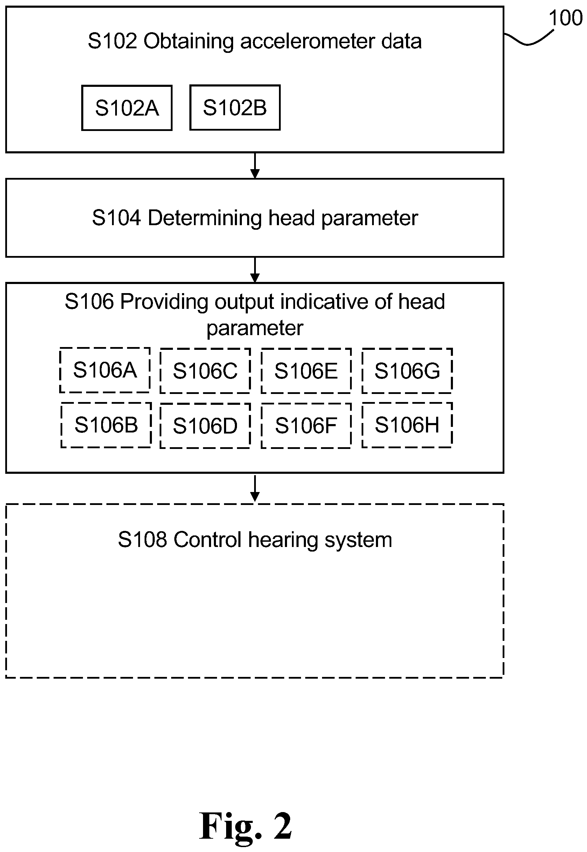

Fig. 2 shows a flow diagram of an exemplary method 100, performed by one or more of: a hearing device, a hearing system, and an accessory device, for head-tracking of a subject according to the present disclosure. The method 100 comprises obtaining S102A, from a first accelerometer, such as a three-axis accelerometer, of the first hearing device, first accelerometer data, and obtaining S102B, from a second accelerometer, such as a three-axis accelerometer, of the second hearing device, second accelerometer data.

The method 100 comprises determining S104 a head parameter indicative of position and/or movement of the head of the subject based on the first accelerometer data and/or the second accelerometer data.

The method 100 comprises providing S106 an output indicative of the head parameter.

Providing S106 an output indicative of the head parameter may comprise feeding S106A, from a hearing application stored in a memory of the accessory device, the head parameter to a secondary application stored in a memory of the accessory device of the hearing system.

Providing S106 an output indicative of the head parameter may comprise storing S106B the head parameter in a memory of the hearing system.

Providing S106 an output indicative of the head parameter may comprise determining S106C a gesture based on the head parameter and optionally mapping S106G the gesture to a control. Providing S106 an output indicative of the head parameter may comprise providing S106H the gesture, e.g. to one or both of the first hearing device and the second hearing device and/or to one or more secondary applications of the accessory device.

Providing S106 an output indicative of the head parameter may comprise providing S106D a control signal indicative of the control, e.g. to one or both of the first hearing device and the second hearing device in accordance with the gesture and/or to one or more secondary applications of the accessory device.

Providing S106 an output indicative of the head parameter may comprise feeding S106E the head parameter to a gesture classifier.

Providing S106 an output indicative of the head parameter may comprise transmitting S106F the head parameter and/or the gesture to a server device. In one or more example methods, the method 100 comprises controlling S108, in the accessory device, a functionality of the hearing system based on the output e.g. as described above.

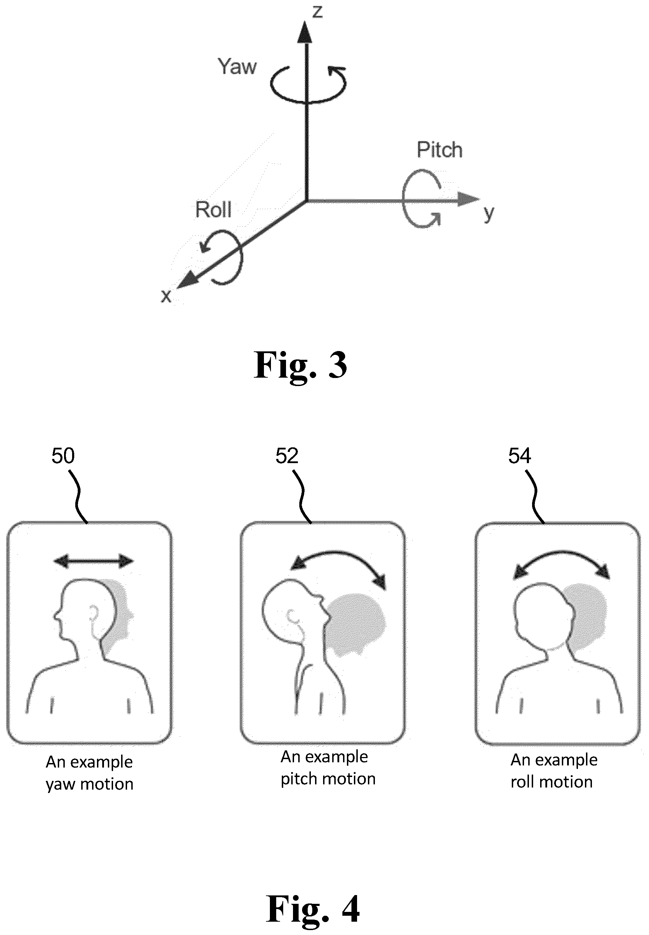

Fig. 3 schematically illustrates the three axes of a three-axis accelerometer. The three axes x, y, and z of the three-axis accelerometer are mutually orthogonal. Rotation about the axes is referred to as yaw, pitch and roll, respectively. For example, if two three-axis accelerometers, such as a first accelerometer and a second accelerometer, are calibrated, rotation about one or more axes may be determined from the relative acceleration of the first accelerometer and the second accelerometer.

Fig. 4 shows an example of yaw, pitch and roll movement of a head. Yaw, pitch and roll may be associated with movements in an internal coordinate system. An example yaw motion 50 may be seen as rotation about a first axis, such as a user shaking their head back and forth from left to right. An example pitch motion 52 may be seen as rotation about a second axis that is perpendicular to the first axis, such as a user nodding their head backwards and forwards. An example roll motion 54 may be seen as rotation about a third axis that is perpendicular to the first axis and perpendicular to the second axis, such as a user tilting their head between left and right.

It is noted that descriptions and features of hearing device functionality, such as hearing device configured to, also apply to methods and vice versa. For example, a description of a hearing device configured to determine also applies to a method, e.g. of operating a hearing device, wherein the method comprises determining and vice versa.

Also disclosed are methods, hearing devices, and hearing systems according to any one of the following items.

Item 1. A method of head-tracking of a subject in a hearing system comprising a first hearing device and a second hearing device, the method comprising:
obtaining, from a first accelerometer of the first hearing device, first accelerometer data;
obtaining, from a second accelerometer of the second hearing device, second accelerometer data;
determining a head parameter indicative of position and/or movement of the head of the subject based on the first accelerometer data and the second accelerometer data; and
providing an output indicative of the head parameter.

Item 2. Method according to item 1, wherein the head parameter comprises one of more of yaw, pitch, and roll of the head.

Item 3. Method according to any one of items 1-2, wherein the head parameter comprises one or more of first position parameter, a second position parameter, and a third position parameter.

Item 4. Method according to any one of items 1-3, wherein the first accelerometer is a three-axis accelerometer and the second accelerometer is a three-axis accelerometer.

Item 5. Method according to any one of items 1-4, wherein the hearing system comprises an accessory device, the method comprising:
controlling, in the accessory device, a functionality of the hearing system based on the output.

Item 6. Method according to item 5, wherein providing an output indicative of the head parameter comprises feeding, from a hearing application stored in a memory of the accessory device, the head parameter to a secondary application stored in a memory of the accessory device of the hearing system.

Item 7. Method according to item 6, wherein the secondary application is one or more of a position application, a home automation application, a gaming application, a fitness application, a communication application, and a health application.

Item 8. Method according to any one of items 1-7, wherein providing an output indicative of the head parameter comprises storing the head parameter in a memory of the hearing system.

Item 9. Method according to any one of items 1-8, wherein providing an output indicative of the head parameter comprises determining a gesture based on the head parameter, mapping the gesture to a control, and providing a control signal indicative of the control to one or both of the first hearing device and the second hearing device in accordance with the gesture.

Item 10. Method according to any one of items 1-9, wherein providing an output indicative of the head parameter comprises feeding the head parameter to a gesture classifier.

Item 11. Method according to any one of items 1-10, wherein providing an output indicative of the head parameter comprises transmitting the head parameter to a server device.

Item 12. A hearing device comprising:
a three-axis accelerometer for provision of a first accelerometer signal;
a set of microphones comprising a first microphone for provision of a first microphone input signal;
a radio transceiver;
a processor for processing input signals and providing an electrical output signal based on the input signals; and
a receiver for converting the electrical output signal to an audio output signal,
wherein the hearing device is configured to transmit, via the radio transceiver, first accelerometer data based on the first accelerometer signal.

Item 13. A hearing system comprising a first hearing device and a second hearing device, wherein the hearing system is configured to:
obtain, from a first accelerometer of the first hearing device, first accelerometer data;
obtain, from a second accelerometer of the second hearing device, second accelerometer data;
determine a head parameter indicative of position and/or movement of the head of the subject based on the first accelerometer data and the second accelerometer data; and
provide an output indicative of the head parameter.

Item 14. Hearing system according to item 13, wherein the hearing system comprises processor circuitry configured to provide the output indicative of the head parameter, wherein to provide the output comprises to determine a gesture based on the head parameter, map the gesture to a control, and provide a control signal indicative of the control to one or both of the first hearing device and the second hearing device in accordance with the gesture.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### LIST OF REFERENCES

1 hearing system
2 hearing device
2A first hearing device
2B second hearing device
4 accessory device
6 transceiver module
8 antenna
10 transceiver
11 wireless connection
11A first wireless connection
11B second wireless connection
11C wireless connection
12A first microphone
12B second microphone
14A first microphone input signal
14B second microphone input signal
11 wireless connection
16A first processor
16B second processor
18A first electrical output signal
18B second electrical output signal
20 user interface
22 receiver
24 user interface of accessory device
26A first accelerometer
26B second accelerometer
28A first accelerometer signal
28B second accelerometer signal
29A first accelerometer data
29B second accelerometer data
28B second accelerometer signal
30 server device
40 processor of accessory device
41A first control signal to first hearing device
41B second control signal to second hearing device
42 memory
44 hearing application
46 secondary first application
48 secondary second application
50 yaw motion
52 pitch motion
54 roll motion
100 method for head-tracking of a subject
S102 obtaining accelerometer data
S102A obtaining, from a first accelerometer of the first hearing device, first accelerometer data
S102B obtaining, from a second accelerometer of the second hearing device, second accelerometer data
S104 determining a head parameter indicative of position and/or movement of the head of the subject
S106 providing an output indicative of the head parameter.
S106A feeding, from a hearing application stored in a memory of the accessory device, the head parameter to a secondary application
S106B comprises storing the head parameter in a memory of the hearing system
S106C determining a gesture based on the head parameter
S106D providing a control signal indicative of the control to one or both of the first hearing device and the second hearing device in accordance with the gesture
S106E feeding the head parameter to a gesture classifier
S106F transmitting the head parameter and/or gesture to a server device
S106G mapping the gesture to a control
S106H providing the gesture

## Claims

1. A method of head-tracking of a subject in a hearing system comprising a first hearing device and a second hearing device, the method comprising:
obtaining, from a first accelerometer of the first hearing device, first accelerometer data;
obtaining, from a second accelerometer of the second hearing device, second accelerometer data;
determining a head parameter indicative of position and/or movement of the head of the subject based on the first accelerometer data and the second accelerometer data; and
providing an output indicative of the head parameter.

2. Method according to claim 1, wherein the head parameter comprises one of more of yaw, pitch, and roll of the head.

3. Method according to any one of claims 1-2, wherein the head parameter comprises one or more of first position parameter, a second position parameter, and a third position parameter.

4. Method according to any one of claims 1-3, wherein the first accelerometer is a three-axis accelerometer and the second accelerometer is a three-axis accelerometer.

5. Method according to any one of claims 1-4, wherein the hearing system comprises an accessory device, the method comprising:
controlling, in the accessory device, a functionality of the hearing system based on the output.

6. Method according to claim 5, wherein providing an output indicative of the head parameter comprises feeding, from a hearing application stored in a memory of the accessory device, the head parameter to a secondary application stored in a memory of the accessory device of the hearing system.

7. Method according to claim 6, wherein the secondary application is one or more of a position application, a home automation application, a gaming application, a fitness application, a communication application, and a health application.

8. Method according to any one of claims 1-7, wherein providing an output indicative of the head parameter comprises storing the head parameter in a memory of the hearing system.

9. Method according to any one of claims 1-8, wherein providing an output indicative of the head parameter comprises determining a gesture based on the head parameter, mapping the gesture to a control, and providing a control signal indicative of the control to one or both of the first hearing device and the second hearing device in accordance with the gesture.

10. Method according to any one of claims 1-9, wherein providing an output indicative of the head parameter comprises feeding the head parameter to a gesture classifier.

11. Method according to any one of claims 1-10, wherein providing an output indicative of the head parameter comprises transmitting the head parameter to a server device.

12. A hearing device comprising:
a three-axis accelerometer for provision of a first accelerometer signal;
a set of microphones comprising a first microphone for provision of a first microphone input signal;
a radio transceiver;
a processor for processing input signals and providing an electrical output signal based on the input signals; and
a receiver for converting the electrical output signal to an audio output signal,
wherein the hearing device is configured to transmit, via the radio transceiver, first accelerometer data based on the first accelerometer signal.

13. A hearing system comprising a first hearing device and a second hearing device, wherein the hearing system is configured to:
obtain, from a first accelerometer of the first hearing device, first accelerometer data;
obtain, from a second accelerometer of the second hearing device, second accelerometer data;
determine a head parameter indicative of position and/or movement of the head of the subject based on the first accelerometer data and the second accelerometer data; and
provide an output indicative of the head parameter.

14. Hearing system according to claim 13, wherein the hearing system comprises processor circuitry configured to provide the output indicative of the head parameter, wherein to provide the output comprises to determine a gesture based on the head parameter, map the gesture to a control, and provide a control signal indicative of the control to one or both of the first hearing device and the second hearing device in accordance with the gesture.
